Europäisches Patentamt

European Patent Office

Office européen des brevets

(11) Numéro de publication: **0 530 062 B1**

# FASCICULE DE BREVET EUROPEEN

(45) Date de publication de fascicule du brevet: **05.07.95**

(51) Int. Cl.6: **C10G 7/00**, B01D 3/06, B01D 1/06, C10G 5/06

(21) Numéro de dépôt: **92402135.5**

(22) Date de dépôt: **23.07.92**

(54) **Procédé de fractionnement d'huile et de gaz sur un effluent de gisement pétrolier.**

(30) Priorité: **08.08.91 FR 9110230**

(43) Date de publication de la demande:
**03.03.93 Bulletin 93/09**

(45) Mention de la délivrance du brevet:
**05.07.95 Bulletin 95/27**

(84) Etats contractants désignés:
**DK GB IT NL**

(56) Documents cités:
**FR-A- 2 311 571**
**US-A- 2 725 342**

(73) Titulaire: **INSTITUT FRANCAIS DU PETROLE**
**4, avenue de Bois Préau**
**F-92502 Rueil-Malmaison (FR)**

(72) Inventeur: **Lermite, Christophe**
**74, rue Raymond Losserand**
**F-75014 Paris (FR)**
Inventeur: **Larue, Joseph**
**97, Grande Rue**
**F-78240 Chambourcy (FR)**
Inventeur: **Rojey, Alexandre**
**52, rue Alexandere Dumas**
**F-92500 Rueil Malmaison (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

Le traitement d'un effluent de gisement pétrolier comprend généralement une étape de fractionnement huile-gaz dont le but est d'ajuster le point de bulle de l'huile produite de façon à la rendre thermodynamiquement stable dans les conditions de stockage.

Le traitement peut également comprendre une étape de désacidification de l'huile produite consistant principalement en l'extraction de la majeure partie de l'hydrogène sulfuré $H_2S$ pour des raisons de toxicité et de corrosion.

Ces étapes sont en général simultanées, l'effluent de production subissant une série de détentes successives, généralement 3 ou 4, depuis la pression de sortie de puits de l'effluent jusqu'à une pression voisine de la pression atmosphérique, avec élimination ou recompression du gaz produit à chaque détente, l'effluent étant en général chauffé avant la dernière détente afin de satisfaire les spécifications en tension de vapeur et en $H_2S$.

Pour l'huile produite, les spécifications requises sont les suivantes:

- Pour la tension de vapeur, le critère généralement retenu est la tension de vapeur à $37.7°C$ ($100°F$) exprimée en PSI ou Reid Vapour Pressure (RVP). Cette spécification est habituellement comprise entre 0.55-0.83 bar (8 et 12 PSI).
- Pour la teneur en $H_2S$, la spécification habituelle est de 60 ppm masse.

Le gaz produit à chaque détente contient des constituants lourds ($C_4^+$) qu'il n'est pas nécessaire de retirer de l'huile pour la stabiliser. Il est souhaitable de récupérer ces constituants lourds pour les réinjecter dans l'huile, car cela augmente la quantité d'huile stabilisée produite tout en abaissant sa densité, ce qui augmente sa valeur marchande. De plus, la présence de ces constituants lourds dans le gaz produit lui confère un point de rosée hydrocarbure élevé préjudiciable à sa commercialisation.

La recompression du gaz produit à chaque détente ainsi que sa condensation partielle par refroidissement permet de récupérer une partie des constituants lourds mais entraîne un surcoût d'investissement croissant avec la puissance de compression nécessaire.

Il a été découvert que le fractionnement huile-gaz, seul ou associé à la désacidification de l'huile produite, peut être réalisé avec un haut rendement en huile et avec une économie substantielle sur la puissance de chauffe, sur la puissance de compression et sur l'encombrement de l'installation, ce qui peut être particulièrement important dans un contexte tel que celui de la production de pétrole en mer.

Il a été également découvert que ces opérations de traitement peuvent être réalisées en au moins une étape de détente de moins qu'il n'est généralement pratiqué dans les opérations de fractionnement par détentes successives.

D'une manière générale, le procédé de fractionnement d'huile et de gaz sur un effluent de gisement pétrolier selon l'invention est caractérisé en ce qu'il comprend les étapes principales suivantes:

(a) une étape de séparation des phases liquide et gazeuse à la pression P1 d'évacuation du gaz, produisant d'une part une fraction gazeuse G1 qui est évacuée et d'autre part, une fraction liquide L1 constituée au moins en partie par de l'huile, ladite fraction liquide L1 étant envoyée à l'étape (b);

(b) au moins une étape de distillation opérée à une pression P2 inférieure ou au plus égale à la pression P1 de l'étape (a), dans une zone de distillation C1 comportant une zone d'échange de chaleur interne et une zone de rebouillage, et permettant de recueillir d'une part une fraction gazeuse G2 et d'autre part une fraction liquide L2, qui est envoyée dans ladite zone d'échange interne, puis évacuée; et

(c) au moins une étape de recompression à la pression P1 d'au moins une partie de la fraction gazeuse G2, qui est au moins en partie mélangée avec la fraction gazeuse G1 et évacuée.

Il a en effet été découvert, et c'est là l'un des principaux objets de la présente invention, que la mise en oeuvre d'une zone d'échange de chaleur interne permet une économie substantielle sur la chaleur à apporter au rebouilleur de la zone de distillation C1.

Il a été également découvert que, dans le cas où l'effluent traité contient un gaz acide et en particulier $H_2S$, il est possible de satisfaire aux deux spécifications de stabilité thermodynamique et de teneur en $H_2S$ en jouant sur la température du rebouilleur et sur le nombre d'étages de l'étape de distillation. En particulier, la présente invention permet grâce au pouvoir séparateur de la distillation d'éliminer $H_2S$ jusqu'à la spécification pour des effluents contenants jusqu'à plusieurs % masse d'$H_2S$, ceci sans perdre d'hydrocarbures supérieurs ($C_4^+$) en tête de la zone de distillation.

Il a été également découvert que la zone d'échange de chaleur interne permet de refroidir le résidu de la distillation, accroissant ainsi sa stabilité thermodynamique et économisant sur les refroidissements ultérieurs.

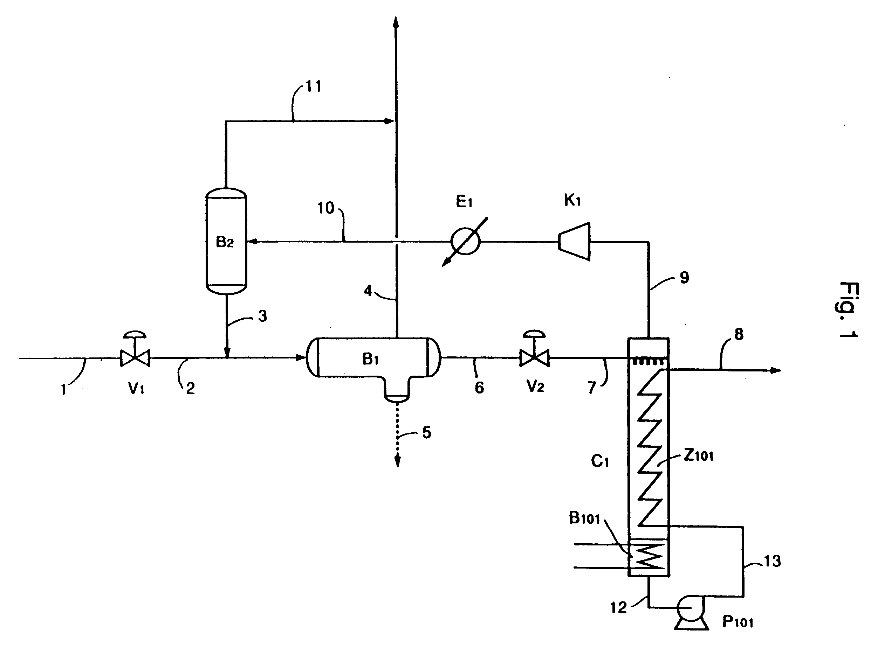

Le procédé selon l'invention est décrit plus en détail ci-après en liaison avec la Figure 1. Il s'adresse plus particulièrement au traitement d'un effluent de gisement pétrolier renfermant des hydrocarbures légers associés.

L'effluent à traiter arrive par le conduit 1. Il est détendu à la pression P1 d'évacuation du gaz (comprise par exemple entre 1 et 10 MPa) dans la vanne V1, dont il sort partiellement vaporisé par le conduit 2 et est mélangé avec une fraction liquide provenant du ballon B2 et arrivant par le conduit 3.

Les phases du mélange ainsi obtenu sont séparées dans le ballon B1. La phase gazeuse est évacuée par le conduit 4, mélangée à une phase gazeuse provenant du ballon B2 arrivant par le conduit 11, et évacuée du procédé. Dans le cas général où l'effluent de sortie de puits contient de l'eau, cette dernière est séparée dans le ballon B1 et cette phase aqueuse est évacuée du procédé par le conduit 5.

La phase hydrocarbure liquide est évacuée par le conduit 6, puis détendue dans une vanne V2 jusqu'à une pression P2 comprise entre la pression P1 et la pression atmosphérique. La pression P2 est comprise par exemple entre 0,15 et 1 MPa.

La phase hydrocarbure sortant de la vanne V2 par le conduit 7 est introduite (étape(b)) dans la zone de distillation C1. Cette zone de distillation comprend une zone de rebouillage B101 et une zone d'échange de chaleur interne Z101, dans laquelle le liquide L2 sortant de ladite zone de rebouillage B101, en remontant le long de ladite zone d'échange de chaleur interne Z101, réchauffe le liquide L1 et la vapeur circulant à contre-courant dans la zone de distillation C1.

La température dans la zone de rebouillage B101 est en général comprise entre 100°C et 250°C, et de préférence entre 140°C et 200°C.

Le résidu de la distillation est conforme aux spécifications RVP et $H_2S$. Après remontée à travers la zone d'échange de chaleur interne Z101, il est évacué par le conduit 8.

Le distillat vapeur est évacué par le conduit 9; dans l'étape (c), il est au moins en partie recomprimé dans le compresseur K1, de la pression P2 à la pression P1, puis en général refroidi dans l'échangeur de chaleur E1 par un fluide externe pouvant être par exemple de l'eau, ou de l'air, ou tout autre fluide de refroidissement disponible sur le site. Cette séquence recompression-refroidissement permet de condenser une phase liquide riche en hydrocarbures supérieurs.

Le mélange liquide-vapeur ainsi formé est évacué de l'échangeur de chaleur E1 vers le ballon B2 par le conduit 10. La phase liquide est évacuée du ballon B2 par le conduit 3 et mélangée à l'effluent provenant de la vanne V1 et arrivant par le conduit 2, pour être envoyée vers le ballon B1 (étape(a), comme déjà décrit précédemment.

La phase vapeur est évacuée du ballon B2 par le conduit 11 et mélangée à une fraction gazeuse provenant du ballon B1 et arrivant par le conduit 4, comme déjà décrit plus haut.

La recompression de la phase gazeuse sortant en tête de la colonne C1 peut être effectuée en un ou plusieurs étages de compression; il est cependant avantageux d'effectuer cette recompression en une seule étape afin de limiter le nombre de compresseurs; dans ce but on poura choisir la valeur de la pression P2 intermédiaire entre la pression P1 et la pression atmosphérique P0 et dans un rapport tel que par exemple P2/P0 est au moins égal à la moitié de P1/P2.

Bien entendu, la phase gazeuse G2 recomprimée à la pression P1 pourrait être mélangée à la phase gazeuse G1 et évacuée du procédé directement sans refroidissement, mais il est beaucoup plus avantageux de refroidir la phase gazeuse G2 après recompression de manière à condenser une partie de la phase G2 et , après séparation dans le ballon B2, de recycler la phase liquide ainsi obtenue vers le ballon B1 comme déjà écrit précédemment.

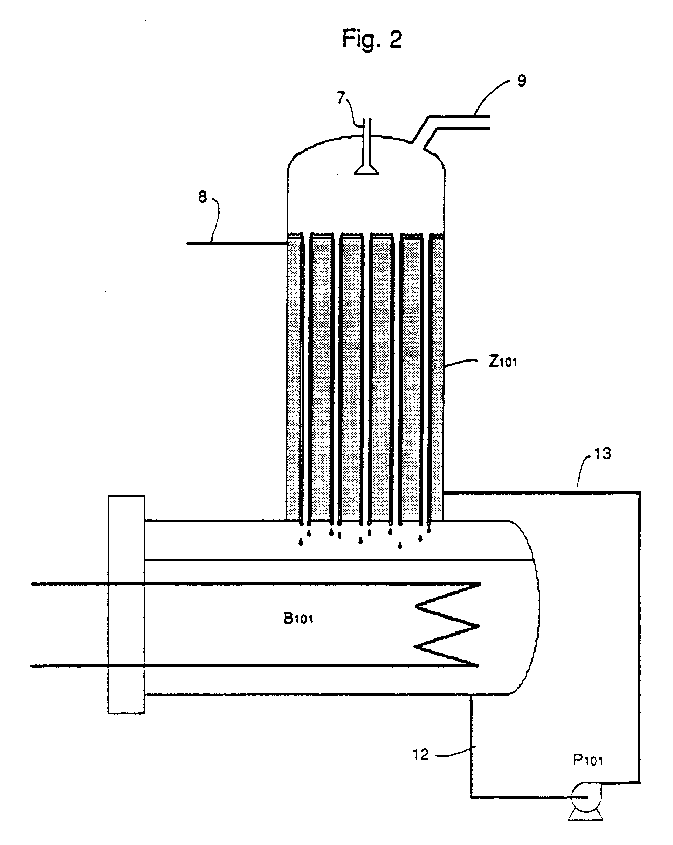

Pour réaliser l'étape (b) du procédé de l'invention, on peut opérer dans un dispositif tel que décrit ci-après en liaison avec la figure 2.
Il comprend principalement :
- Une zone de rebouillage B101, qui comprend un ballon d'une capacité permettant l'immersion dans le résidu de la distillation d'un dispositif de rebouillage connu de l'homme de l'art, comme par exemple un chauffage électrique, ou une épingle de circulation d'un fluide caloporteur, ou encore un tube à feu; et
- Une zone d'échange de chaleur interne Z101, située au dessus de la zone de rebouillage, constituée de deux espaces de circulation; dans l'un de ces espaces s'écoule par gravité l'huile à dégazer arrivant en tête du dispositif de distillation C1 par le conduit 7, à contre-courant de la vapeur remontant de la zone de rebouillage B101 à travers ladite zone d'échange de chaleur interne Z101, ladite vapeur étant ensuite évacuée du dispositif de distillation C1 par le conduit 9; dans l'autre espace, s'écoule de bas en haut le résidu sortant de la zone de rebouillage B101 par le conduit 12, à travers la pompe P101 et rentrant dans la zone d'échange de chaleur par le conduit 13, puis sortant de ladite zone d'échange de chaleur Z101 par le conduit 8.

La zone d'échange de chaleur interne Z101 peut être réalisée selon différentes configurations, dont quelques exemples sont détaillés ci-après.

Par exemple, la zone d'échange de chaleur interne Z101 peut être constituée de tubes verticaux dans lesquels l'huile à dégazer coule en film tombant sur les parois internes des tubes tandis que le résidu remontant de la zone de rebouillage B101 circule à l'extérieur des tubes dans la calandre. La paroi interne desdits tubes verticaux peut être lisse, mais également présenter des aspérités, ou avoir subi un traitement de surface favorisant le transfert de matière et de chaleur entre les phases circulant à l'intérieur des tubes, ainsi que le transfert de chaleur entre les phases circulant de part et d'autre de la paroi des tubes. Par exemple, la surface interne des tubes pourra avoir une géométrie favorisant l'apparition de vagues au sein du film de liquide tombant, ou bien présenter des canelures dans l'axe des tubes de manière à augmenter la surface interne de ceux-ci, ou bien pourra être enduite d'un dépôt de particules solides agglomérées favorisant la nucléation de bulles de vapeur au sein du film de liquide tombant.

Lesdits tubes verticaux peuvent également être remplis de garnissage en vrac comme par exemple des billes, des anneaux ou des selles. De préférence, la plus grande dimension d'un élément de garnissage sera inférieure au huitième du diamètre desdits tubes.

Lesdits tubes verticaux peuvent également être remplis de garnissage structuré constitués par exemple de toile métallique, de tricot métallique, de plaques ou de croisillons tels qu'utilisés par exemple dans les mélangeurs statiques.

Une autre configuration possible consiste à opérer sur la surface externe des tubes le contact entre l'huile à dégazer et la vapeur remontant de la zone de rebouillage B101 par la calandre, le résidu remontant, à travers la pompe P101, de la zone de rebouillage B101 par l'intérieur des tubes. Dans ce cas, la calandre peut être vide ou remplie de garnissage en vrac ou structuré. Dans ce cas également, la surface externe des tubes peut être lisse ou présenter des aspérités, ou avoir subi un traitement de surface favorisant le transfert de matière et de chaleur entre les phases circulant à l'extérieur des tubes, ainsi que le transfert de chaleur entre les phases circulant de part et d'autre de la paroi des tubes.

La zone d'échange de chaleur interne Z101 peut également avoir toute structure connue de l'homme de l'art, par exemple les deux espaces de circulation peuvent être constitués, pour l'un, de tubes bobinés, pour l'autre, d'une calandre entourant lesdits tubes; lesdits espaces de circulation peuvent également être délimités par un ensemble de plaques.

Le dispositif de distillation C1 pourra également comprendre un dispositif de répartition de l'huile à dégazer dans l'espace de circulation correspondant de la zone d'échange de chaleur interne Z101 lorsque cet espace est multiple (par exemple constitué de tubes). De tels dispositifs sont connus de l'homme de l'art.
L'exemple suivant illustre l'invention.

EXEMPLE

Dans cet exemple, on procède selon le schéma représenté sur la Figure 1. L'effluent à traiter, qui est un pétrole brut sortant du puits de production, arrive par le conduit 1 sous un débit de 138,2 tonne/h; sa température est de 60°C, sa pression est de 30 MPa. Il est détendu jusqu'à la pression P1 de 3 MPa dans la vanne V1, d'où il ressort par le conduit 2 à la température de 37 °C. Il est ensuite mélangé à une phase liquide L3 provenant du ballon B2 par le conduit 3 sous un débit de 1,55 tonne/h; cette phase liquide est à une température de 35°C et à une pression 3 MPa. Le mélange ainsi obtenu est envoyé dans le ballon B1 où les phases liquides et gazeuse sont séparées. La phase gazeuse G1 est évacuée par le conduit 4 sous un débit de 40,6 tonne/h; deux phases liquides sont également séparées : la phase liquide hydrocarbure L1 est évacuée par le conduit 6 vers la vanne V2 sous un débit est de 85,9 tonne/h; la phase liquide aqueuse est évacuée du procédé par le conduit 5 sous un débit de 13,2 tonne/h. Dans la vanne V2, la phase liquide L1 est détendue jusqu'à une pression P2 de 0,67 MPa et partiellement vaporisée, les phases liquide et vapeur ainsi obtenues sont à la température de 32°C et entrent par le conduit 7 dans la zone de distillation C1 qui comprend une zone d'échange de chaleur interne Z101 et une zone de rebouillage B101. La température dans le rebouilleur B101 est de 147°C. La zone d'échange de chaleur interne Z101 est constituée de tubes verticaux dans lesquels l'huile à dégazer coule en films tombants sur les parois internes des tubes. La phase liquide L2 sortant de la zone de rebouillage B101 à travers la pompe P101 à 147°C est retournée dans la zone d'échange de chaleur interne Z101, dans laquelle elle circule à l'extérieur des tubes, puis elle est évacuée en tête de la zone de distillation C1 par le conduit 8 à 71°C, sous un débit de 79,4 tonne/h. La phase vapeur G2 est évacuée de la tête de la zone de distillation C1 par le conduit 9 sous un débit de 6,5 tonne/h à la température de 40°C.

Sortant de la zone de distillation C1 par le conduit 9, la phase gazeuse G2 entre dans le compresseur K1, dont la puissance est de 282 kW, d'où elle ressort à la pression de 3 MPa et à la température de 131°C et entre dans l'échangeur de chaleur E1. Dans l'échangeur de chaleur E1, la phase gazeuse G2 est refroidie à 35°C par de l'eau de refroidissement extérieure au procédé, ce refroidissement entraînant la condensation d'une fraction du gaz sous forme d'une phase liquide L3. Le mélange est évacué de l'échangeur de chaleur E1 par le conduit 10 et envoyé dans le ballon B2, dans lequel les phases liquide et gazeuse sont séparées. La phase liquide L3 est mélangée au fluide provenant de la vanne V1 par le conduit 2, la phase gazeuse est évacuée par le conduit 11 et mélangée à la phase gazeuse G1 circulant dans le conduit 4, et la phase gazeuse résultant de ce mélange est évacuée à la température de 36°C avec un débit de 45,6 tonne/h.

**Revendications**

1. Procédé de fractionnement d'huile et de gaz sur un effluent de gisement pétrolier caractérisé en ce qu'il comprend:

   (a) une étape de séparation des phases liquide et gazeuse à la pression P1 d'évacuation du gaz, produisant d'une part une fraction gazeuse G1 qui est évacuée et d'autre part, une fraction liquide L1 constituée au moins en partie par de l'huile, ladite fraction liquide L1 étant envoyée à l'étape (b);

   (b) au moins une étape de distillation opérée à une pression P2 inférieure ou au plus égale à la pression P1 de l'étape (a), dans une zone de distillation C1 comportant une zone d'échange de chaleur interne et une zone de rebouillage, et permettant de recueillir d'une part une fraction gazeuse G2 et d'autre part une fraction liquide L2, qui est envoyée dans ladite zone d'échange interne, puis évacuée; et

   (c) au moins une étape de recompression à la pression P1 d'au moins une partie de la fraction gazeuse G2, qui est au moins en partie mélangée avec la fraction gazeuse G1 et évacuée.

2. Procédé selon la revendication 1 caractérisé en ce que l'étape (b) est réalisée à une pression P2 intermédiaire entre la pression P1 à laquelle est opérée l'étape (a) et la pression atmosphérique P0, le rapport P2/P0 étant au moins égal à la moitié du rapport P1/P2.

3. Procédé selon la revendication 1 ou 2 caractérisé en ce que dans l'étape (c), après recompression la fraction gazeuse G2 est refroidie et au moins en partie condensée, la phase liquide ainsi obtenue étant recyclée vers l'étape (a).

4. Procédé selon l'une quelconque des revendications 1 à 3 caractérisé en ce que la température du fond de la distillation de l'étape (b) est comprise entre 100°C et 250°C, et la pression dans la zone de distillation est comprise entre 0,15 et 1 MPa.

5. Procédé selon l'une quelconque des revendications 1 à 4 caractérisé en ce que la fraction liquide L2 circule en montant dans la zone d'échange interne de chaleur, globalement à contre-courant de la phase liquide L1, qui descend dans la zone de distillation.

6. Procédé selon l'une quelconque des revendications 1 à 5 caractérisé en ce que la zone d'échange de chaleur interne est constituée de tubes verticaux et d'une calandre entourant lesdits tubes.

7. Procédé selon la revendication 6 caractérisé en ce que le contact entre l'huile à dégazer et la vapeur remontant de la zone de rebouillage B101 est opéré à l'intérieur des tubes, tandis que le résidu de la distillation remonte à l'extérieur des tubes par la calandre.

8. Procédé selon la revendication 7 caractérisé en ce que l'huile à dégazer s'écoute en film tombant dans les tubes.

9. Procédé selon la revendication 7 ou 8 caractérisé en ce que la surface interne des tubes présente des aspérités, ou a subi un traitement de surface favorisant le transfert de matière et de chaleur.

10. Procédé selon la revendication 7 caractérisé en ce que les tubes verticaux sont remplis de garnissage en vrac.

11. Procédé selon la revendication 10 caractérisé en ce que la plus grande dimension des éléments de garnissage est inférieure au huitième du diamètre des tubes verticaux.

12. Procédé selon la revendication 7 caractérisé en ce que les tubes verticaux sont remplis de garnissage structuré.

13. Procédé selon la revendication 6 caractérisé en ce que le contact entre l'huile à dégazer et la vapeur remontant de la zone de rebouillage B101 est opéré dans la calandre, tandis que le résidu de la distillation remonte à l'intérieur des tubes.

14. Procédé selon la revendication 13 caractérisé en ce que la surface externe des tubes présente des aspérités, ou a subi un traitement de surface favorisant le transfert de matière et de chaleur.

15. Procédé selon la revendication 13 caractérisé en ce que la calandre est remplie de garnissage en vrac.

**16.** Procédé selon la revendication 13 caractérisé en ce que la calandre est remplie de garnissage structuré.

**17.** Procédé selon l'une quelconque des revendications 1 à 5 caractérisé en ce que la zone d'échange de chaleur interne est constituée de tubes bobinés et d'une calandre entourant lesdits tubes.

**18.** Procédé selon l'une quelconque des revendications 1 à 5 caractérisé en ce que la zone d'échange de chaleur interne est constituée de plaques.

**19.** Procédé selon l'une quelconque des revendications 1 à 18 caractérisé en ce que la distillation est effectuée dans une zone verticale, sans condenseur, alimentée en tête.

**Claims**

**1.** A process for the fractionation of oil and gas on a petroleum deposit effluent, characterised in that the process comprises:
(a) a stage wherein the liquid and gaseous phases are separated at the gas evacuation pressure P1, producing a gaseous fraction G1, on the one hand, which is evacuated, and producing a liquid fraction L1, on the other hand, which is composed at least in part of oil, said liquid fraction L1 being sent to stage (b);
(b) at least one distillation stage which is carried out at a pressure P2 which is less than or at least equal to the pressure P1 in stage (a), in a distillation zone C1 which comprises an internal heat exchange zone and a reboiling zone, and which permits a gaseous fraction G2 to be recovered, on the one hand, and a liquid fraction L2 to be recovered, on the other hand, which is sent into said internal exchange zone, then evacuated; and
(c) at least one recompression stage at pressure P1 of at least a part of the gaseous fraction G2 which is at least partially mixed with the gaseous fraction G1 and evacuated.

**2.** A process according to Claim 1, characterised in that stage (b) is carried out at an intermediate pressure P2 between the pressure P1 at which stage (a) is carried out and atmospheric pressure P0, the ratio P2/P0 being at least equal to half the ratio P1/P2.

**3.** A process according to Claim 1 or Claim 2, characterised in that in stage (c), after recompression, the gaseous fraction G2 is cooled and at least partly condensed, the liquid phase thus obtained being recycled to stage (a).

**4.** A process according to any one of claims 1 to 3, characterized in that the distillation bottoms temperature in stage (b) is between 100°C and 250°C, and the pressure in the distillation zone is between 0.15 and 1 MPa.

**5.** A process according to any one of claims 1 to 4, characterized in that the liquid fraction L2 circulates and rises in the internal heat exchange zone, substantially counter-current to the liquid phase L1 which descends in the distillation zone.

**6.** A process according to any one of claims 1 to 5, characterized in that the internal heat exchange zone is formed by vertical tubes and a shell which surrounds said tubes.

**7.** A process according to claim 6, characterized in that the contact between the oil to be degassed and the vapour rising from the reboiling zone B101 is effected inside the tubes, whilst the distillation residue rises outside the tubes through the shell.

**8.** A process according to claim 7, characterized in that the contact between the oil to be degassed falls through the tubes as a falling film.

**9.** A process according to claim 7 or claim 8, characterized in that the inner surface of the tubes has regions of unevenness, or has undergone a surface treatment to promote heat and matter transfer.

**10.** A process according to claim 7, characterized in that the vertical tubes are filled with a loose packing.

**11.** A process according to claim 10, characterized in that the maximum size of the packing elements is less than one eighth the diameter of the vertical tubes.

**12.** A process according to claim 7, characterized in that the vertical tubes are packed with a structural packing.

**13.** A process according to claim 6, characterized in that the contact between the oil which is to be degassed and the vapour rising from the reboiling zone B101 is effected in the shell, whilst the distillation residue rises inside the tubes.

14. A process according to claim 13, characterized in that the external surface of the tubes has regions of unevenness, or has undergone a surface treatment to promote heat and matter transfer.

15. A process according to claim 13, characterized in that the shell is filled with a loose packing.

16. A process according to claim 13, characterized in that the shell is packed with a structural packing.

17. A process according to any one of claims 1 to 5, characterized in that the internal heat exchange zone is formed by spooled tubes and by a shell which surrounds said tubes.

18. A process according to any one of claims 1 to 5, characterized in that the internal heat exchange zone is formed by plates.

19. A process according to any one of claims 1 to 18, characterized in that distillation is carried out in a vertical zone, without a condenser, and supplied at the head.

**Patentansprüche**

1. Verfahren zur Fraktionierung von Öl und Gas an einem Erdöllagerstättenabstrom, dadurch gekennzeichnet, daß es umfaßt:

   (a) eine Stufe zur Trennung der flüssigen und gasförmigen Phase beim Abzugsdruck P1 des Gases, wodurch einerseits eine gasförmige Fraktion G1, die abgezogen wird und andererseits eine flüssige Fraktion L1 erzeugt wird, die wenigstens zum Teil durch Öl gebildet ist, wobei diese flüssige Fraktion L1 in die Stufe (b) geschickt wird;

   (b) wenigstens eine Destillationsstufe, die bei einem Druck P2 kleiner oder höchstens gleich dem Druck P1 der Stufe (a) in einer Destillationszone C1 betrieben wird, die eine innere Wärmeaustauscherzone und eine Abkochzone umfaßt und es ermöglicht, eines Teils eine gasförmige Fraktion G2 und anderenteils eine flüssige Fraktion L2 zu sammeln, die in diese innere Wärmeaustauscherzone geschickt, dann abgezogen wird; und

   (c) wenigstens eine Zone zur Rekompression beim Druck P1 wenigstens eines Teils der gasförmigen Fraktion G2, die wenigstens zum Teil mit der gasförmigen Fraktion G1 gemischt und abgezogen wird.

2. Verfahren nach Anspruch 1, dadurch gekennzeichnet, daß die Stufe (b) bei einem Druck P2 zwischen dem Druck P1, bei dem die Stufe (a) betrieben wird und dem atmosphärischen Druck P0 durchgeführt wird, wobei das Verhältnis P2/P0 wenigstens gleich der Hälfte des Verhältnisses P1/P2 ist.

3. Verfahren nach Anspruch 1 oder 2, dadurch gekennzeichnet, daß in der Stufe (c) nach Rekompression die gasförmige Fraktion G2 gekühlt und wenigstens zum Teil kondensiert wird, wobei die so erhaltene flüssige Phase gegen die Stufe (a) rezykliert wird.

4. Verfahren nach einem der Ansprüche 1 bis 3, dadurch gekennzeichnet, daß die Temperatur des Destillationsbodens der Stufe (b) zwischen 100 und 250°C umfaßt und der Druck in der Destillationszone zwischen 0,15 und 1 MPa umfaßt.

5. Verfahren nach einem der Ansprüche 1 bis 4, dadurch gekennzeichnet, daß die flüssige Fraktion L2 unter Aufsteigen in der inneren Wärmeaustauscherzone allgemein im Gegenstrom zur flüssigen Phase L1, die in die Destillationszone absteigt, zirkuliert.

6. Verfahren nach einem der Ansprüche 1 bis 5, dadurch gekennzeichnet, daß die innere Wärmeaustauscherzone gebildet wird von vertialen Rohren und einem diese Rohre umschließenden Kalander.

7. Verfahren nach Anspruch 6, dadurch gekennzeichnet, daß der Kontakt zwischen dem zu vergasenden Öl und dem aus der Abkochzone B101 aufsteigenden Dampf im Inneren der Rohre bewerkstelligt wird, während der Rest der Destillation gegen das Äußere der Rohre durch den Kalander wieder aufsteigt.

8. Verfahren nach Anspruch 7, dadurch gekennzeichnet, daß das zu vergasende Öl im in den Rohren fallenden Film fließt.

9. Verfahren nach Anspruch 7 oder 8, dadurch gekennzeichnet, daß die Innenfläche der Rohre Rauheiten aufweist oder eine Oberflächenbehandlung, die den Stoff und Wärmeübergang begünstigt, erfahren hat.

10. Verfahren nach Anspruch 7, dadurch gekennzeichnet, daß die vertikalen Rohre mit Schüttfüllkörpern gefüllt werden.

11. Verfahren nach Anspruch 10, dadurch gekennzeichnet, daß die größte Abmessung der Füllkörperelemente kleiner als ein Achtel des Durchmessers der vertikalen Rohre ist.

12. Verfahren nach Anspruch 7, dadurch gekennzeichnet, daß die vertikalen Rohre mit strukturierten Füllkörpern gefüllt sind.

13. Verfahren nach Anspruch 6, dadurch gekennzeichnet, daß der Kontakt zwischen dem zu entgasenden Öl und dem aus der Abkochzone B101 aufsteigenden Dampf im Kalander bewerkstelligt wird, während der Rest der Destillation im Inneren der Rohre aufsteigt.

14. Verfahren nach Anspruch 13, dadurch gekennzeichnet, daß die Außenfläche der Rohre Rauheiten aufweist oder eine den Übergang von Stoff und Wärme begünstigende Behandlung erfahren hat.

15. Verfahren nach Anspruch 13, dadurch gekennzeichnet, daß der Kalander mit einer Füllkörperschüttung gefüllt ist.

16. Verfahren nach Anspruch 13, dadurch gekennzeichnet, daß der Kalander mit einer strukturierten Füllkörperfüllung gefüllt ist.

17. Verfahren nach einem beliebigen der Ansprüche 1 bis 5, dadurch gekennzeichnet, daß die innere Wärmeaustauscherzone gebildet wird von gewickelten Rohren und einem diese Rohre umschließenden Kalander.

18. Verfahren nach einem der Ansprüche 1 bis 5, dadurch gekennzeichnet, daß die innere Wärmeaustauscherzone von Platten gebildet wird.

19. Verfahren nach einem beliebigen der Ansprüche 1 bis 18, dadurch gekennzeichnet, daß die Destillation in einer vertikalen Zone ohne Kondensator, gespeist vom Kopf aus, durchgeführt wird.

## Fig. 1

# Fig. 2